# EUROPEAN PATENT SPECIFICATION

(11) **EP 2 523 040 B1**
(45) Date of publication and mention of the grant of the patent: **26.08.2015**
(21) Application number: 12166500.4
(22) Date of filing: 03.05.2012
(51) Int. Cl.: G02F 1/13357, G02B 6/00

(54) **Display with a light guide plate**
Anzeige mit einer Lichtleiterplatte
Écran avec une plaque guide d'ondes

(30) Priority: 12.05.2011 JP 2011107358
(43) Date of publication of application: 14.11.2012
(73) Proprietor: Funai Electric Co., Ltd., Daito-shi, Osaka 574-0013 (JP)
(72) Inventor: Tomohisa, Tajiri, Osaka, 574-0013 (JP)
(74) Representative: Manitz, Finsterwald & Partner GbR

(56) References cited:
- US-A1- 2002 054 488
- US-A1- 2002 197 051

## Description

### BACKGROUND OF THE INVENTION

### Field of the Invention

The present invention relates to a display, and more particularly, it relates to a display including light directing portions directing light emitted from a light source to a light-emitting surface of a light guide plate.

US 2002/054488 A1 discloses the features of the preamble of the independent claim. US 2002/197051 A1 discloses related art.

### Description of the Background Art

A display including light directing portions directing light emitted from a light source to a light-emitting surface of a light guide plate is known in general, as disclosed in Japanese Patent Laying-Open No. 2007-12323, for example.

Japanese Patent Laying-Open No. 2007-12323 discloses an edge light type liquid crystal module including light sources, a light guide plate, a plurality of light directing portions, and a liquid crystal cell, in which the light sources are arranged to be opposed to a side surface of the light guide plate. The plurality of light directing portions are provided on the rear surface of the light guide plate, and have a function of directing light emitted from the light sources toward the light guide plate to a light-emitting surface of the light guide plate.

On the light guide plate provided in the conventional edge light type module disclosed in Japanese Patent Laying-Open No. 2007-12323, the plurality of light directing portions may be arranged to correspond to the positions of the light sources. Specifically, the light directing portions are arranged such that the number of the light directing portions is relatively small (the density of the light directing portions is low) on regions of the light guide plate facing the light sources (regions having a large amount of incident light), and the number of the light directing portions is relatively large (the density of the light directing portions is high) on regions of the light guide plate corresponding to positions between the light sources (regions having a small amount of incident light). The light directing portions distributed with high and low densities direct a larger amount of light to the light-emitting surface of the light guide plate in the regions having a small amount of incident light as compared with the regions having a large amount of incident light. Thus, the amount of light directed to the light-emitting surface of the light guide plate is equalized in the regions having a large amount of incident light and the regions having a small amount of incident light, so that display quality can be maintained.

In the edge light type module described in Japanese Patent Laying-Open No. 2007-12323, however, the regions where the light directing portions are densely provided may face the light sources while the regions where the light directing portions are sparsely provided may face the positions between the light sources, if relative positional deviation of the light sources and the light guide plate occurs. In this case, the densely provided light directing portions direct a large amount of light to the light-emitting surface of the light guide plate in the regions having a large amount of incident light. On the other hand, the sparsely provided light directing portions direct a small amount of light to the light-emitting surface of the light guide plate in the regions having a small amount of incident light. Therefore, in general, if the relative positional deviation of the light sources and the light guide plate occurs, the amount of light emitted from the light guide plate considerably varies to be unequalized. Consequently, display quality is disadvantageously reduced.

### SUMMARY OF THE INVENTION

The present invention has been proposed in order to solve the aforementioned problem, and an object of the present invention is to provide a display capable of suppressing reduction in display quality even if positional deviation of a light guide plate and a light source occurs.

The display of the present invention is defined in the independent claim.

A display according to an aspect of the present invention includes all the features of claim 1 and notably a light source, a light guide plate having a side surface constituting a light-receiving surface on which light emitted from the light source is incident, a bottom surface, and a surface constituting a light-emitting surface, a plurality of light directing portions provided on the bottom surface of the light guide plate, directing the light incident on the light guide plate to the light-emitting surface, and a display cell arranged on the light-emitting surface of the light guide plate, while the plurality of light directing portions provided on the bottom surface of the light guide plate are so arranged that at least either arrangement intervals between the plurality of light directing portions or areas of the plurality of light directing portions are irregular.

In the display according to the aspect of the present invention, as hereinabove described, the plurality of light directing portions provided on the bottom surface of the light guide plate are so arranged that at least either the arrangement intervals between the plurality of light directing portions or the areas of the plurality of light directing portions are irregular, whereby the light directing portions may not be arranged on the light guide plate to correspond to the arrangement position of the light source. Thus, variation in the amount of light emitted from the light guide plate in a case where positional deviation of the light guide plate and the light source occurs can be suppressed, and hence reduction in display quality can be suppressed even if the positional deviation of the light guide plate and the light source occurs.

In the aforementioned display according to the aspect, the plurality of light directing portions are preferably so arranged that density of the plurality of light directing portions increases with distance from the light source while at least either arrangement intervals between the plurality of light directing portions or areas of the plurality of light directing portions are irregular. According to this structure, in a portion of the light guide plate having a small amount of incident light from the light source, far from the light source, the densely arranged light directing portions can efficiently direct light to the light-emitting surface of the light guide plate so that a sufficient amount of emitted light can be ensured over the entire light-emitting surface of the light guide plate, while the irregularly arranged light directing portions suppress reduction in display quality even if the positional deviation of the light guide plate and the light source occurs.

In the aforementioned display according to the aspect, the plurality of light directing portions are preferably so configured that at least either arrangement intervals between the plurality of light directing portions or areas of the plurality of light directing portions are irregular in at least a prescribed region of the light guide plate in a vicinity of the light-receiving surface. According to this structure, variation in the amount of light emitted from the light guide plate resulting from positional deviation of the light guide plate and the light source can be suppressed in the region of the light guide plate in the vicinity of the light-receiving surface, where difference in brightness due to the amount of incident light easily appears because of a small distance from the light source. Thus, reduction in display quality can be effectively suppressed in the region of the light guide plate in the vicinity of the light-receiving surface.

In this case, a plurality of light sources are provided to be spaced from each other by a distance D along a direction in which the light-receiving surface extends, and the prescribed region includes a region where a ratio L/D of a distance L in a direction toward a side surface opposite to the light-receiving surface from the light-receiving surface of the light guide plate to the distance D between the adjacent light sources is less than or equal to 1. According to this structure, reduction in display quality can be easily suppressed in the region of L/D ≤ 1 of the light guide plate in the vicinity of the light-receiving surface, where a difference in the amount of light between a region of the light guide plate having a large amount of incident light and a region thereof having a small amount of incident light easily appears.

In the aforementioned structure in which at least either the arrangement intervals between the plurality of light directing portions or the areas of the plurality of light directing portions are irregular in at least the prescribed region of the light guide plate in the vicinity of the light-receiving surface, the plurality of light directing portions are preferably so configured that at least either arrangement intervals between the plurality of light directing portions or areas of the plurality of light directing portions are irregular over an entire region of the light guide plate including not only the prescribed region in the vicinity of the light-receiving surface but also a region other than the prescribed region. According to this structure, variation in the amount of light emitted from the light guide plate can be suppressed over the overall light guide plate if positional deviation of the light guide plate and the light source occurs, and hence reduction in display quality can be suppressed over the entire display region of the display cell even if the positional deviation of the light guide plate and the light source occurs.

In the aforementioned structure in which at least either the arrangement intervals between the plurality of light directing portions or the areas of the plurality of light directing portions are irregular in at least the prescribed region, the plurality of light directing portions are preferably so configured that at least either arrangement intervals between the plurality of light directing portions or areas of the plurality of light directing portions have regularity in a region of the light guide plate other than the prescribed region. According to this structure, the light directing portions having regularity in the region of the light guide plate other than the prescribed region can direct light uniformly to the light-emitting surface of the light guide plate while reduction in display quality is effectively suppressed in the region of the light guide plate in the vicinity of the light-receiving surface.

In the aforementioned structure in which the plurality of light directing portions have regularity in the region of the light guide plate other than the prescribed region, the plurality of light directing portions are preferably so arranged that arrangement intervals between the plurality of light directing portions decrease with distance from the light source. According to this structure, the light directing portions can be densely arranged in the portion of the light guide plate having a small amount of incident light from the light source, far from the light source, and hence a sufficient amount of emitted light can be ensured over the entire light-emitting surface of the light guide plate.

In the aforementioned display according to the aspect, a plurality of light sources are preferably provided to be spaced from each other along a first direction in which the light-receiving surface of the light guide plate extends, and the arrangement intervals between the plurality of light directing portions are irregular in the first direction. According to this structure, the light guide plate and the light sources may not be precisely aligned in at least either the first direction in which the light-receiving surface of the light guide plate extends or the second direction orthogonal to the first direction, and hence reduction in display quality can be suppressed even if positional deviation of the light guide plate and the light sources occurs.

In the aforementioned structure in which the plurality of light directing portions are so arranged that the arrangement intervals between the plurality of light directing portions decrease with distance from the light source, the plurality of light directing portions preferably have the same shape as each other. According to this structure, reduction in display quality can be easily suppressed simply by varying the arrangement intervals between the light directing portions, even if positional deviation of the light guide plate and the light source occurs.

In the aforementioned structure in which the plurality of light directing portions are so arranged that the arrangement intervals between the plurality of light directing portions decrease with distance from the light source, the arrangement intervals between the plurality of light directing portions are irregular in a first direction. According to this structure, regions having a large amount of incident light and regions having a small amount of incident light emerge along the first direction in which the light sources are arranged so that the effect of positional deviation in the first direction can be effectively suppressed by irregularizing the arrangement intervals between the light directing portions in the first direction.

In the aforementioned display according to the aspect, the plurality of light directing portions are preferably so configured that areas of the plurality of light directing portions are irregular. According to this structure, the plurality of light directing portions can be easily irregularized even if the arrangement intervals between the plurality of light directing portions are the same.

In this case, the plurality of light directing portions preferably include a first light directing portion having a circular shape and a second light directing portion having a flattened shape. According to this structure, the areas of the light directing portions can be easily irregularized by combining the first light directing portion having the circular shape and the second light directing portion having the flattened shape.

In the aforementioned display according to the aspect, the light source is preferably constituted by a point light source, and light emitted from the point light source is directed to the light-emitting surface by the plurality of light directing portions so arranged that at least either arrangement intervals between the plurality of light directing portions or areas of the plurality of light directing portions are irregular. Thus, reduction in display quality resulting from positional deviation of the light guide plate and the light source can be suppressed by the irregularly arranged light directing portions, even if the point light source likely to form the regions having a large amount of incident light and the regions having a small amount of incident light in the light guide plate is employed.

In the aforementioned display according to the aspect, a plurality of light sources are arranged, and each of the plurality of light directing portions preferably has a width smaller than a width of each of the plurality of light sources in a first direction in which the light-receiving surface of the light guide plate extends. According to this structure, the more numerous light directing portions can be arranged so that light can be efficiently applied to the light directing portions. Consequently, reduction in display quality can be easily suppressed even if positional deviation of the light guide plate and the light sources occurs.

In the aforementioned structure in which the plurality of light directing portions have regularity in the region of the light guide plate other than the prescribed region, each of the arrangement intervals between the plurality of light directing portions is smaller than a width of the light source in a first direction in which the light-receiving surface of the light guide plate extends. According to this structure, the arrangement intervals between the light directing portions narrow so that light can be efficiently applied to the light directing portions. Consequently, reduction in display quality can be easily suppressed even if positional deviation of the light guide plate and the light source occurs.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing the overall structure of a liquid crystal television set according to a first embodiment of the present invention;
Fig. 2 is a sectional view taken along the line 500-500 of the liquid crystal television set shown in Fig. 1;
Fig. 3 is an enlarged sectional view of a lower portion of the liquid crystal television set shown in Fig. 2;
Fig. 4 is a front elevational view showing the structure of a light guide plate of the liquid crystal television set shown in Fig. 2;
Fig. 5 is a front elevational view showing the structure of the light guide plate in the vicinity of LEDs of the liquid crystal television set shown in Fig. 2;
Fig. 6 is a front elevational view showing a pattern of light directing portions of the light guide plate shown in Fig. 5;
Fig. 7 is a front elevational view showing the structure of a light guide plate of a liquid crystal television set according to a second embodiment of the present invention;
Fig. 8 is a front elevational view showing the structure of the light guide plate in the vicinity of LEDs of the liquid crystal television set shown in Fig. 7; and
Fig. 9 is a front elevational view showing a pattern of light directing portions of a light guide plate in a modification of the liquid crystal television set according to each of the first and second embodiments of the present invention.

### DESCRIPTION OF THE PREFERRED EMBODIMENTS

### (First Embodiment)

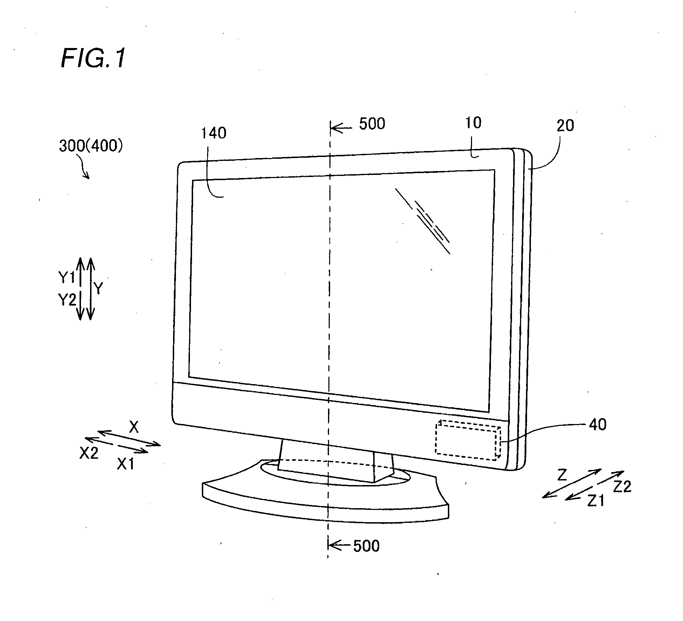

First, the structure of a liquid crystal television set 300 according to a first embodiment of the present invention is described with reference to Figs. 1 to 6. The liquid crystal television set 300 is an example of the "display" in the present invention.

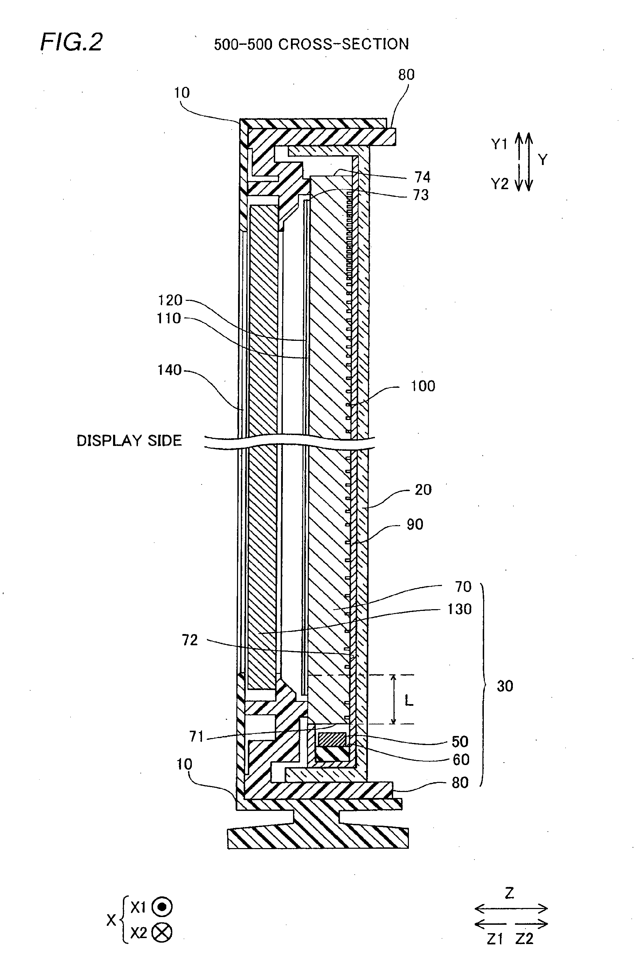

The liquid crystal television set 300 according to the first embodiment includes a front cabinet 10, a rear cabinet 20, a liquid crystal module 30, and a tuner 40, as shown in Figs. 1 and 2. The liquid crystal module 30 includes a plurality of LEDs 50, an LED substrate 60, a light guide plate 70, a mold frame 80, and a liquid crystal cell 130. The LEDs 50 are examples of the "light sources" or the "point light sources" in the present invention, and the tuner 40 is an example of the "receiving portion" in the present invention. The liquid crystal cell 130 is an example of the "display cell" in the present invention.

The front cabinet 10 is arranged on the front side (along arrow Z1) of the liquid crystal television set 300. The front cabinet 10 engages with the mold frame 80 of the liquid crystal module 30 from the front side (along arrow Z1) of the liquid crystal television set 300.

The rear cabinet 20 is arranged on the rear side (along arrow Z2) of the liquid crystal television set 300. The rear cabinet 20 engages with the mold frame 80 of the liquid crystal module 30 from the rear side (along arrow Z2) of the liquid crystal television set 300.

The tuner 40 is stored in a space surrounded by the front cabinet 10 and the rear cabinet 20.

The liquid crystal module 30 is fixed by the mold frame 80, and stored in a space surrounded by the front cabinet 10 and the rear cabinet 20.

The LEDs 50 are mounted on the LED substrate 60, and these LEDs 50 and LED substrate 60 are provided in the vicinity of a lower portion (along arrow Y2) of the light guide plate 70. The LEDs 50 emit light toward the light guide plate 70.

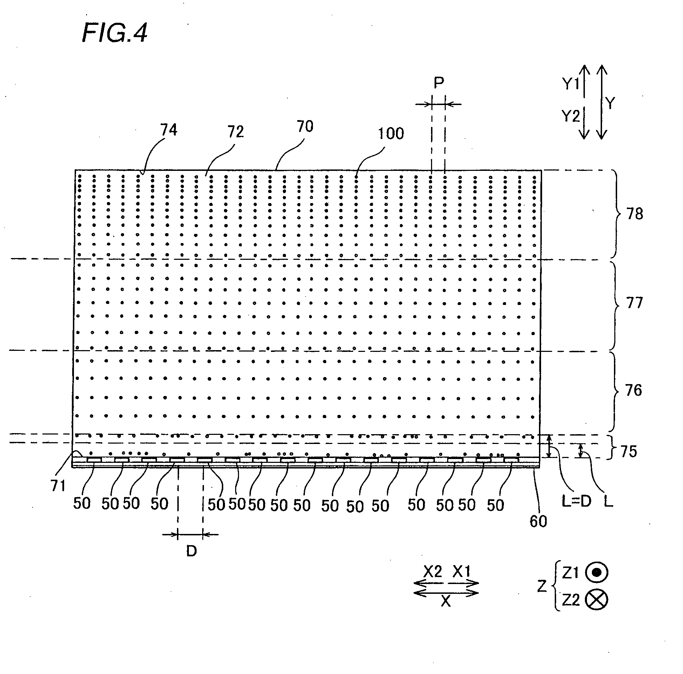

According to the first embodiment, the LEDs 50 are arranged in a direction X at constant arrangement intervals (pitches) D, as shown in Fig. 4. The LEDs 50 arranged in the direction X are arranged to be parallel to a side surface 71 of the light guide plate 70 and opposed to the side surface 71 at a short distance. According to the first embodiment, each of the arrangement intervals D is about 10 mm.

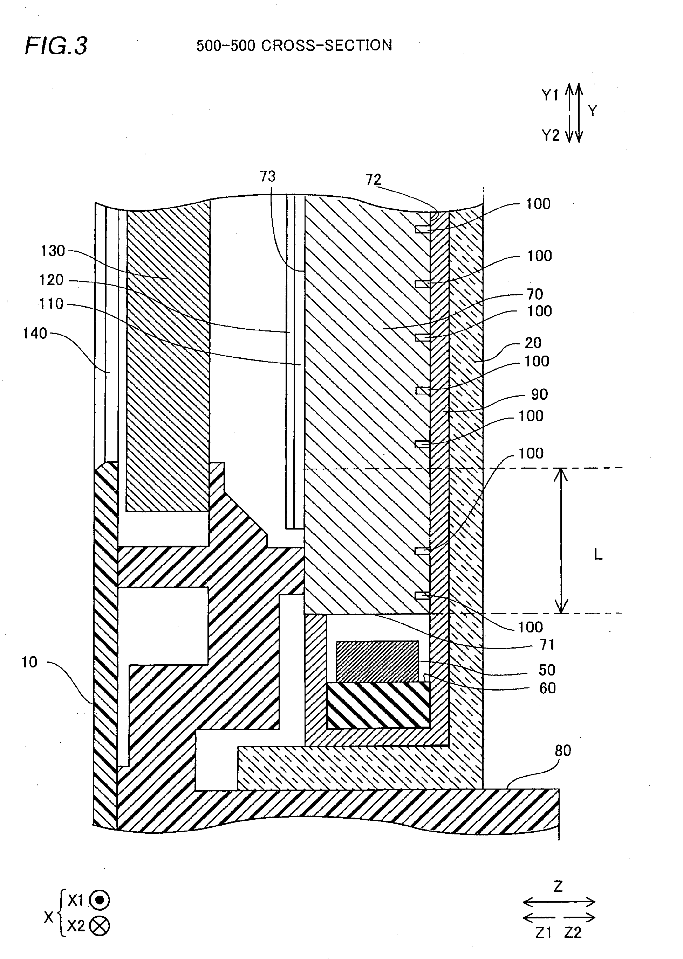

The light guide plate 70 is in the form of a substantially rectangular flat plate, and includes the side surface 71 constituting a light-receiving surface on which the light emitted from the LEDs 50 is incident, a bottom surface 72, and a surface 73 constituting a light-emitting surface, as shown in Figs. 2 and 3. A reflection sheet 90 is provided to cover the bottom surface 72 of the light guide plate 70 and the sides of the LEDs 50 and the LED substrate 60 along arrow Y2. Thus, the light emitted from the LEDs 50 to the light guide plate 70 and light leaking from the bottom surface 72 of the light guide plate 70 to the rear surface (along arrow Z2) of the light guide plate 70 can be reflected by the reflection sheet 90 to be effectively emitted from the surface 73 of the light guide plate 70. A diffusion sheet 110 and a lens sheet 120 are arranged sequentially along arrow Z1 on the surface (along arrow Z1) of the light guide plate 70.

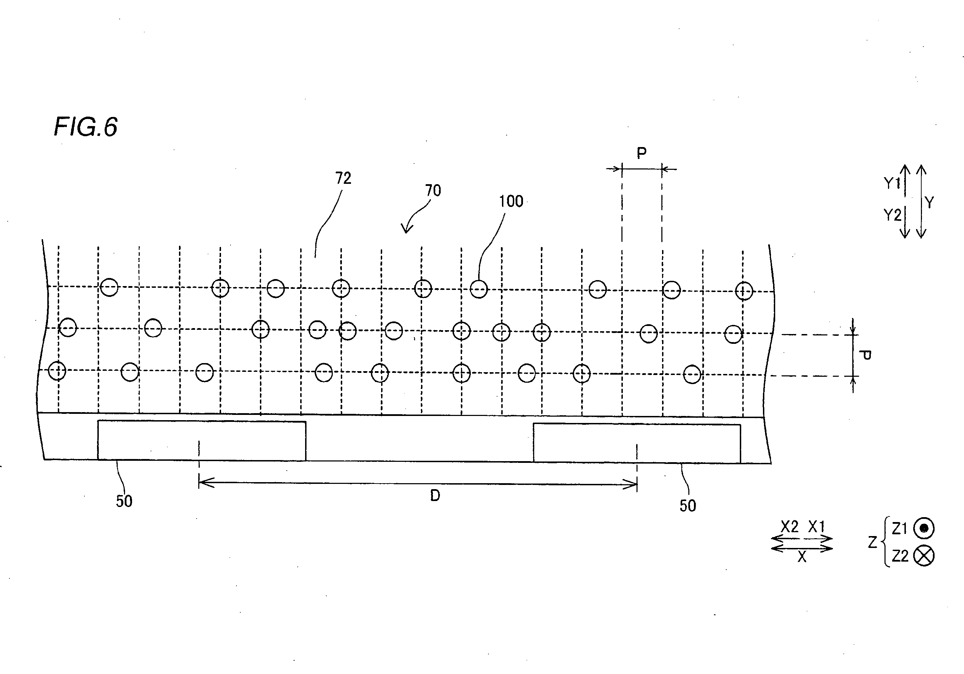

A plurality of light directing portions 100 are provided over the overall bottom surface 72 of the light guide plate 70 to protrude from the bottom surface 72, as shown in Figs. 2 to 4. The light directing portions 100 are formed integrally with the light guide plate 70 by an injection molding method. The light incident on the light guide plate 70 travels along arrow Y1 inside the light guide plate 70 while repeating total reflection inside the light guide plate 70. The light is emitted from the surface 73 of the light guide plate 70 by varying an angle of incidence with respect to the surface 73 by the light directing portions 100. The light directing portions 100 each have a circular shape, as shown in Fig. 6, as viewed from the side of the surface 73 (side along arrow Z1). The light directing portions 100 each have a convex shape with respect to the bottom surface 72 of the light guide plate 70, as viewed laterally (along arrow X2). All of the light directing portions 100 are formed in substantially the same size. In other words, all of the light directing portions 100 are formed in substantially the same shape having regularity. The light directing portions 100 each have a width smaller than the width of each of the LEDs 50 in a first direction (direction X) in which the side surface 71 constituting the light-receiving surface of the light guide plate 70 extends. According to the first embodiment, the diameter of each of the light directing portions 100 viewed from the side of the surface 73 (side along arrow Z1) is about 0.4 mm.

Next, a pattern of the light directing portions 100 is described. As shown in Figs. 4 to 6, in a prescribed region 75, the light directing portions 100 are irregularly arranged in the first direction (direction X) in which the LEDs 50 are arranged. The prescribed region 75 is in the vicinity of the side surface 71 serving as the light-receiving surface of the light guide plate 70, and a region from L = 0 to L = D (L denotes a distance in a direction Y). In other words, the prescribed region 75 is a region of L/D ≤ 1. On the other hand, the light directing portions 100 in regions 76 to 78 obtained by equally dividing a region of the light guide plate 70 located beyond the prescribed region 75 along arrow Y1 into three parts are regularly arranged in the first direction (direction X) in which the LEDs 50 are arranged.

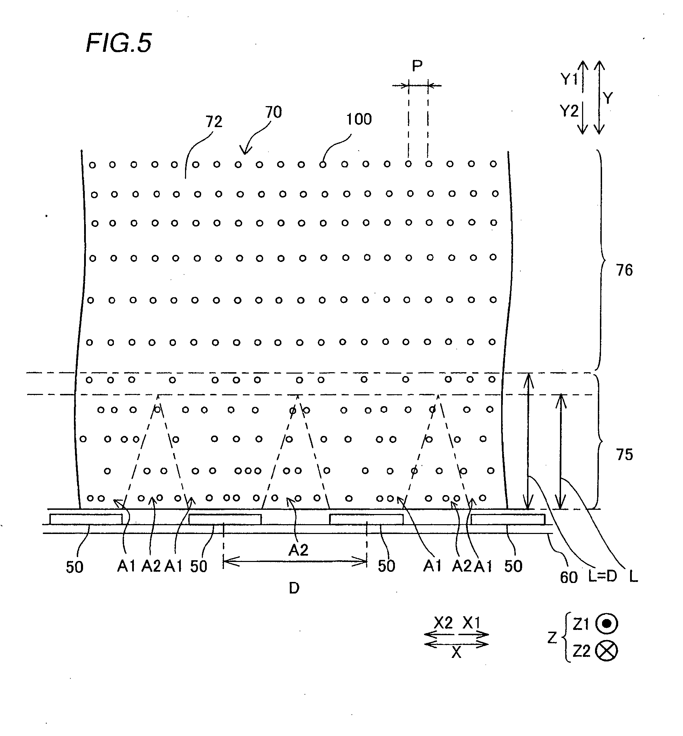

As shown in Figs. 5 and 6, in the prescribed region 75 (corresponding to a region of L/D ≤ 1), the adjacent light directing portions 100 are arranged at irregular intervals in the first direction (direction X) in which the LEDs 50 substantially parallel to the side surface 71 of the light guide plate 70 are arranged. On the other hand, the adjacent light directing portions 100 are arranged at substantially constant intervals in a second direction (direction Y) substantially orthogonal to the first direction. In the prescribed region 75, the light emitted from the plurality of LEDs 50 does not sufficiently overlap, so that a difference in the amount of light between regions A1 (see Fig. 5) having a large amount of incident light, opposed to the LEDs 50 and regions A2 (see Fig. 5) having a small amount of incident light, opposed to positions between the LEDs 50 increases. Therefore, in the prescribed region 75, relatively bright regions (regions A1 having a large amount of incident light, facing the LEDs 50) and relatively dark regions (regions A2 having a small amount of incident light, facing the positions between the LEDs 50) regularly emerge along the arrangement direction (direction X) of the LEDs 50. According to the first embodiment, the light directing portions 100 are irregularly arranged on the bottom surface 72 of the light guide plate 70 along the direction X, and hence light entering the regions A1 and light entering the regions A2 are dispersed in the direction X. Consequently, a difference in brightness between the regions A1 and the regions A2 is reduced.

In other words, a border between brightness and darkness of the light guide plate 70 causing difference in brightness of the liquid crystal cell 130 and color unevenness thereof becomes blurred, whereby color unevenness of the liquid crystal cell 130 can be suppressed. Furthermore, even if positional deviation of the light guide plate 70 and the LEDs 50 occurs, the light directing portions 100 are irregularly arranged so that unevenness of the amount of light emitted from the light guide plate can be suppressed.

The plurality of light directing portions 100 are so configured that arrangement intervals therebetween have regularity in the regions 76 to 78 of the light guide plate 70. Specifically, in the regions 76 to 78 (corresponding to regions of L/D > 1), the adjacent light directing portions 100 are arranged at constant intervals P in the first direction (direction X) in which the LEDs 50 are arranged to be substantially parallel to the side surface 71 of the light guide plate 70. On the other hand, the adjacent light directing portions 100 are so arranged that intervals therebetween in the second direction (direction Y) orthogonal to the first direction gradually decreases along arrow Y1. In other words, the light directing portions 100 are so configured that the arrangement intervals therebetween decrease with distance from the LEDs 50. In these regions, the light emitted from the plurality of LEDs 50 sufficiently overlaps, so that a difference in the amount of light between regions of the light guide plate opposed to the LEDs 50 and regions of the light guide plate opposed to the positions between the LEDs 50 is not enough to emerge as a difference in brightness of the liquid crystal cell 130. Therefore, the adjacent light directing portions 100 are arranged at the substantially constant intervals P in the first direction (direction X). The arrangement intervals between the light directing portions 100 each have a width smaller than the width of each of the LEDs 50 in the first direction (direction X) in which the side surface 71 constituting the light-receiving surface of the light guide plate 70 extends.

The light directing portions 100 are so configured on the light guide plate 70 that the intervals between the adjacent light directing portions 100 decrease along arrow Y1, as shown in Fig. 4. The light directing portions 100 are formed in substantially the same size, and hence the density of the light directing portions 100 increases with distance from the LEDs 50. Thus, a large amount of light can be applied toward the surface 73 even from a portion of the light guide plate 70 having a small amount of incident light, far from the LEDs 50 by increasing the density of the light directing portions 100.

The diffusion sheet 110 is arranged on the surface 73 (along arrow Z1) of the light guide plate 70, as shown in Fig. 2, and has a function of uniformly applying light to the liquid crystal cell 130. The lens sheet 120 is arranged on a surface (along arrow Z1) of the diffusion sheet 110, and has a function of improving brightness on a display surface.

The liquid crystal cell 130 is fixed on the side of the mold frame 80 along arrow Z1, as shown in Figs. 2 and 3. An antireflective sheet 140 is arranged on the side of a surface (along arrow Z1) of the liquid crystal cell 130.

According to the first embodiment, as hereinabove described, the plurality of light directing portions 100 are so arranged that the arrangement intervals therebetween are irregular, whereby the light directing portions 100 may not be arranged on the light guide plate 70 to correspond to the arrangement of the LEDs 50. Thus, variation in the amount of light emitted from the light guide plate 70 in a case where positional deviation of the light guide plate 70 and the LEDs 50 occurs can be suppressed, and hence reduction in display quality can be suppressed even if the positional deviation of the light guide plate 70 and the LEDs 50 occurs.

According to the first embodiment, as hereinabove described, the plurality of light directing portions 100 are so arranged that the density thereof increases with distance from the LEDs 50 while the arrangement intervals therebetween are irregular. Thus, in the portion of the light guide plate 70 having a small amount of incident light from the LEDs 50, the densely arranged light directing portions 100 can efficiently direct light to the surface 73 of the light guide plate 70 so that a sufficient amount of emitted light can be ensured over the entire surface 73 of the light guide plate 70, while the irregularly arranged light directing portions 100 suppress reduction in display quality even if the positional deviation of the light guide plate 70 and the LEDs 50 occurs.

According to the first embodiment, as hereinabove described, the plurality of light directing portions 100 are so configured that the arrangement intervals therebetween are irregular in the prescribed region 75 where the ratio L/D of the distance L along arrow Y1 from the light-receiving surface of the light guide plate 70 to the distance D between the adjacent LEDs 50 is less than or equal to 1. Thus, reduction in display quality can be easily suppressed more effectively in the region of L/D ≤ 1 of the light guide plate 70 in the vicinity of the light-receiving surface, where the effect of difference in brightness due to the amount of incident light easily appears.

According to the first embodiment, as hereinabove described, the plurality of light directing portions 100 are so configured that the arrangement intervals therebetween and the areas thereof have regularity in the regions 76 to 78 of the light guide plate 70, whereby the light directing portions 100 having regularity in the regions 76 to 78 of the light guide plate 70 can direct light uniformly to the light-emitting surface of the light guide plate 70 while reduction in display quality is effectively suppressed in the region of the light guide plate 70 in the vicinity of the light-receiving surface.

According to the first embodiment, as hereinabove described, the plurality of light directing portions 100 are so arranged that the arrangement intervals therebetween decrease with distance from the LEDs 50. Thus, the light directing portions 100 can be densely arranged in the portion of the light guide plate 70 having a small amount of incident light from the LEDs 50, far from the LEDs 50, and hence a sufficient amount of emitted light can be ensured over the entire light-emitting surface of the light guide plate 70.

According to the first embodiment, as hereinabove described, the plurality of light directing portions 100 are formed in the same shape, whereby reduction in display quality can be easily suppressed simply by varying the arrangement intervals between the light directing portions 100, even if positional deviation of the light guide plate 70 and the LEDs 50 occurs.

According to the first embodiment, as hereinabove described, the plurality of light directing portions 100 are so arranged that the arrangement intervals therebetween are irregular in the first direction in which the LEDs 50 are arranged, whereby the regions A1 having a large amount of incident light and the regions A2 having a small amount of incident light easily emerge along the first direction in which the LEDs 50 are arranged so that the effect of positional deviation in the first direction can be effectively suppressed.

According to the first embodiment, as hereinabove described, the plurality of light directing portions 100 so arranged that the arrangement intervals therebetween are irregular are configured to direct the light emitted from the LEDs 50 to the surface 73 of the light guide plate 70. Thus, light is radially emitted so that reduction in display quality resulting from positional deviation of the light guide plate 70 and the LEDs 50 can be suppressed by the irregularly arranged light directing portions 100, even if the LEDs 50 that are point light sources likely to form the regions A1 having a large amount of incident light and the regions A2 having a small amount of incident light in the light guide plate 70 are employed.

According to the first embodiment, as hereinabove described, the plurality of LEDs 50 are arranged while the plurality of light directing portions 100 each are configured to have the width smaller than the width of each of the LEDs 50 in the direction X in which the light-receiving surface of the light guide plate 70 extends. Thus, the more numerous light directing portions 100 can be arranged so that light can be efficiently applied to the light directing portions 100. Consequently, reduction in display quality can be easily suppressed even if positional deviation of the light guide plate 70 and the LEDs 50 occurs.

According to the first embodiment, as hereinabove described, the plurality of light directing portions 100 are so configured that each of the arrangement intervals therebetween is smaller than the width of each of the LEDs 50 in the direction X in which the light-receiving surface of the light guide plate 70 extends. Thus, the arrangement intervals between the light directing portions 100 narrow so that light can be efficiently applied to the light directing portions 100. Consequently, reduction in display quality can be easily suppressed even if positional deviation of the light guide plate 70 and the LEDs 50 occurs.

### (Second Embodiment)

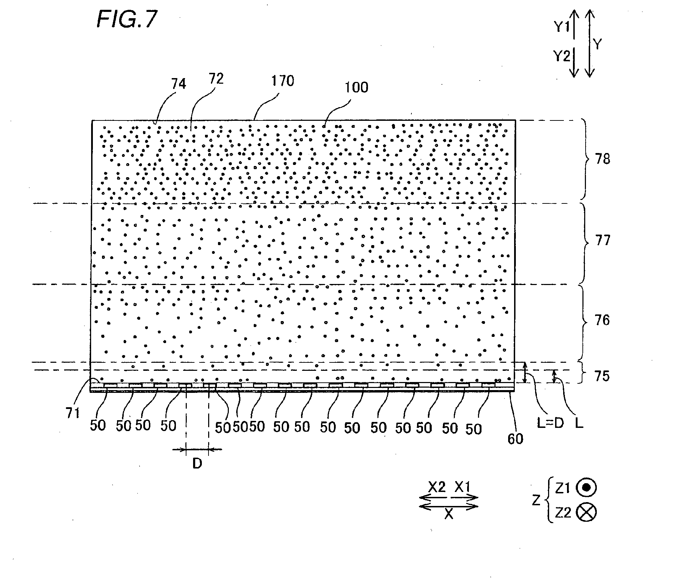

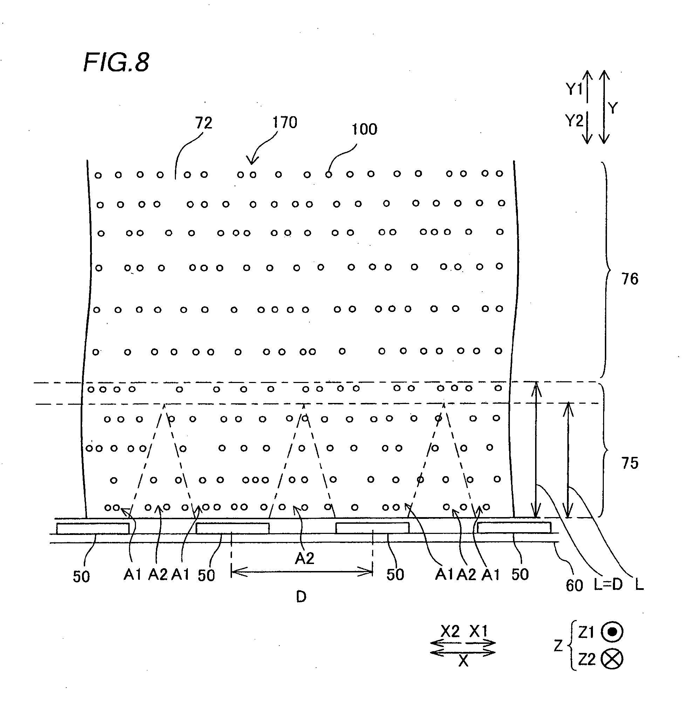

The structure of a liquid crystal television set 400 (see Fig. 1) according to a second embodiment of the present invention is now described with reference to Figs. 7 and 8. The liquid crystal television set 400 is an example of the "display" in the present invention.

In this second embodiment, arrangement intervals between light directing portions 100 in regions 76 to 78 are set to be irregular in a first direction (direction X), dissimilarly to the first embodiment in which the arrangement intervals between the light directing portions 100 in the regions 76 to 78 are set to be regular in the first direction (direction X).

As shown in Figs. 7 and 8, in a light guide plate 170 of the liquid crystal television set 400 according to the second embodiment, arrangement intervals between the light directing portions 100 in a prescribed region 75 and the regions 76 to 78 are irregular in the first direction (direction X). The arrangement of the light directing portions 100 in the prescribed region 75 is similar to that of the light directing portions 100 according to the aforementioned first embodiment.

In the second embodiment, the adjacent light directing portions 100 are arranged at irregular intervals in the first direction (direction X) also in the regions 76 to 78 similarly to the prescribed region 75. Therefore, the arrangement intervals between the light directing portions 100 are irregular in the first direction (direction X) over the entire region of the light guide plate 170.

In the regions 76 to 78, the light directing portions 100 are so configured on the light guide plate 170 that the intervals between the adjacent light directing portions 100 gradually decrease along arrow Y1, as shown in Fig. 7. The light directing portions 100 are formed in substantially the same size, and hence the density of the light directing portions 100 increases with distance from light sources. Thus, a large amount of light can be applied toward a surface 73 even from a portion of the light guide plate 170 having a small amount of incident light, far from the light sources by increasing the density of the light directing portions 100.

The remaining structure of the second embodiment is similar to that of the aforementioned first embodiment.

According to the second embodiment, as hereinabove described, the plurality of light directing portions 100 are so configured that the arrangement intervals therebetween are irregular over the overall light guide plate 170. Thus, variation in the amount of light emitted from the light guide plate 170 can be suppressed over the overall light guide plate 170 if positional deviation of the light guide plate 170 and LEDs 50 occurs, and hence reduction in display quality can be suppressed over the entire display region of a liquid crystal cell 130 even if the positional deviation of the light guide plate 170 and the LEDs 50 occurs.

The remaining effects of the second embodiment are similar to those of the aforementioned first embodiment.

Although the present invention has been described and illustrated in detail, it is clearly understood that the same is by way of illustration and example only and is not to be taken by way of limitation, the scope of the present invention being limited only by the terms of the appended claims.

While the present invention is applied to the liquid crystal television set in each of the aforementioned first and second embodiments, the present invention is not restricted to this. The present invention may alternatively be applied to a liquid crystal display, a display, and a television set other than the liquid crystal television set.

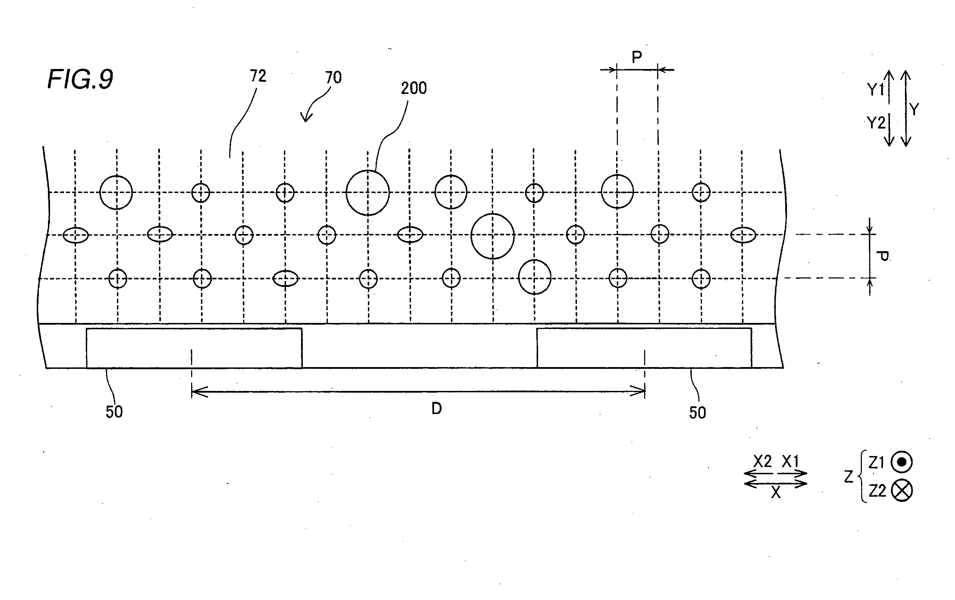

While the arrangement intervals between the plurality of light directing portions 100 provided on the light guide plate are irregular in each of the aforementioned first and second embodiments, the present invention is not restricted to this. As in a modification shown in Fig. 9, a plurality of light directing portions 200 may alternatively be so arranged that the areas thereof are irregular. Furthermore, both the arrangement intervals between the plurality of light directing portions and the areas thereof may alternatively be irregular.

The plurality of light directing portions are so configured that the arrangement intervals therebetween are irregular in the prescribed region 75 where the ratio L/D of the distance L to the distance D is less than or equal to 1 in the aforementioned first embodiment, and the plurality of light directing portions are so configured that the arrangement intervals therebetween are irregular in all the prescribed region 75 and regions 76 to 78 of L/D > 1 in the aforementioned second embodiment.

While the density of the light directing portions increases with distance from the LEDs in each of the aforementioned first and second embodiments, the present invention is not restricted to this. The density of the light directing portions may alternatively be constant regardless of a distance from the LEDs.

While each of the light directing portions is in the circular shape in each of the aforementioned first and second embodiments, the present invention is not restricted to this. As in the modification shown in Fig. 9, the light directing portions may alternatively include first light directing portions each having a substantially circular shape and second light directing portions each having a substantially flattened shape. Furthermore, each of the light directing portions may alternatively be in a rectangular shape, a triangular shape, an elliptical shape, etc. According to this structure, the areas of the light directing portions can be easily irregularized simply by combining the substantially circular shape and the substantially flattened shape.

While each of the light directing portions protrudes in the convex shape from the bottom surface of the light guide plate, as viewed from the side of the side surface of the light guide plate in each of the aforementioned first and second embodiments, the present invention is not restricted to this. The light directing portions may alternatively be concaved with respect to the bottom surface of the light guide plate, as viewed from the side of the side surface of the light guide plate. For example, each of the light directing portions may alternatively be concaved in a rectangular shape or a triangular shape.

While the light directing portions are integrally formed on the bottom surface of the light guide plate by the injection molding method in each of the aforementioned first and second embodiments, the present invention is not restricted to this. The light directing portions may alternatively be arranged on the light guide plate by screen printing or the like.

While the LEDs are provided in the vicinity of the lower portion (along arrow Y2) of the light guide plate in each of the aforementioned first and second embodiments, the present invention is not restricted to this. The light sources may alternatively be provided on the upper surface side (side of a side surface 74) of the light guide plate or the side of a side surface of the light guide plate in a short-side direction.

While the LEDs are provided as the light sources in each of the aforementioned first and second embodiments, the present invention is not restricted to this. A halogen lamp or a metal hydro lamp may alternatively be provided as a light source.

While both the areas of the light directing portions and the arrangement intervals therebetween have regularity in the regions 76 to 78 of the light guide plate in the aforementioned first embodiment, the present invention is not restricted to this. Either the areas of the light directing portions or the arrangement intervals therebetween may alternatively have regularity.

## Claims

1. A display (300, 400) comprising:
a plurality of light sources (50);
a light guide plate (70) having a side surface (71) constituting a light-receiving surface on which light emitted from said plurality of light sources (50) is incident, a bottom surface (72), and a surface (73) constituting a light-emitting surface;
a plurality of light directing portions (100) provided on said bottom surface (72) of said light guide plate (70), directing said light incident on said light guide plate (70) to said light-emitting surface; and
a display cell (130) arranged on said light-emitting surface of said light guide plate (70), wherein
said plurality of light sources (50) are provided to be spaced from each other by a distance D along a first direction in which said light-receiving surface (71) extends,
**characterized in that**
said plurality of light directing portions (100) govided on said bottom surface (72) of said light guide plate (70) are, in at least a prescribed region (75) of said light guide plate (70), so arranged that at least either
arrangement intervals between said plurality of light directing portions (100) are irregular in said first direction and constant in a second direction orthogonal to said first direction, or
areas of said plurality of light directing portions (100) are irregular,
said prescribed region (75) comprises the region of the light guide plate (70) extending from the light receiving surface (71) to a distance L from the light receiving surface (71) where a ratio L/D is less than or equal to 1.

2. The display according to claim 1, wherein
said plurality of light directing portions (100) are so arranged that density of said plurality of light directing portions (100) increases with distance from said plurality of light sources (50).

3. The display according to claim 1, wherein
said plurality of light directing portions (100) are so configured that at least either arrangement intervals between said plurality of light directing portions (100) are irregular in said first direction and constant in said second direction orthogonal to said first direction or areas of said plurality of light directing portions (100) are irregular over an entire region of said light guide plate (70) including not only said prescribed region (75) in the vicinity of said light-receiving surface but also a region (76, 77, 78) other than said prescribed region (75).

4. The display according to claim 1, wherein
said plurality of light directing portions (100) are so configured that at least either arrangement intervals between said plurality of light directing portions (100) or areas of said plurality of light directing portions (100) have regularity in a region of said light guide plate (70) other than said prescribed region (75).

5. The display according to claim 4, wherein
said plurality of light directing portions (100) are so arranged that arrangement intervals between said plurality of light directing portions (100) decrease with distance from said plurality of light sources (50).

6. The display according to claim 5, wherein
said plurality of light directing portions (100) have the same shape as each other.

7. The display according to claim 1, wherein
said plurality of light directing portions (100) for which arrangement intervals are irregular in said first direction and constant in said second direction are so configured that areas of said plurality of light directing portions (100) are irregular.

8. The display according to claim 1, wherein
said plurality of light sources are constituted by point light sources (50).

9. The display according to claim 1, wherein
each of said plurality of light directing portions (100) has a width smaller than a width of each of said plurality of light sources (100) in said first direction.

10. The display according to claim 4, wherein
each of said arrangement intervals between said plurality of light directing portions (100) is smaller than a width of said plurality of light sources (50) in said first direction.

## Patentansprüche

1. Anzeige (300, 400), umfassend:
eine Mehrzahl von Lichtquellen (50);
eine Lichtleiterplatte (70), die eine Seitenfläche (71), die eine Lichtaufnahmefläche bildet, auf die Licht, das von der Mehrzahl von Lichtquellen (50) emittiert wird, einfällt, eine Bodenfläche (72) und eine Fläche (73), die eine Lichtemissionsfläche bildet, aufweist;
eine Mehrzahl von Lichtlenkabschnitten (100), die an der Bodenfläche (72) der Lichtleiterplatte (70) vorgesehen sind, die das Licht, das auf die Lichtleiterplatte (70) einfällt, zu der Lichtemissionsfläche lenken; und
eine Anzeigezelle (130), die an der Lichtemissionsfläche der Lichtleiterplatte (70) angeordnet ist, wobei
die Mehrzahl von Lichtquellen (50) derart vorgesehen ist, dass sie voneinander eine Distanz D entlang einer ersten Richtung, in der sich die Lichtaufnahmefläche (71) erstreckt, beabstandet sind,
**dadurch gekennzeichnet, dass**
die Mehrzahl von Lichtlenkabschnitten (100), die an der Bodenfläche (72) der Lichtleiterplatte (70) vorgesehen sind, in zumindest einer vorgeschriebenen Region (75) der Lichtleiterplatte (70) derart angeordnet sind, dass zumindest entweder
Anordnungsintervalle zwischen der Mehrzahl von Lichtlenkabschnitten (100) in der ersten Richtung unregelmäßig und in einer zweiten Richtung senkrecht zu der ersten Richtung konstant sind, oder
Bereiche der Mehrzahl von Lichtlenkabschnitten (100) unregelmäßig sind, und
die vorgeschriebene Region (75) die Region der Lichtleiterplatte (70) umfasst, die sich von der Lichtaufnahmefläche (71) bis zu einer Distanz L von der Lichtaufnahmefläche (71) erstreckt, wobei ein Verhältnis L/D kleiner als oder gleich 1 ist.

2. Anzeige nach Anspruch 1, wobei
die Mehrzahl von Lichtlenkabschnitten (100) derart angeordnet ist, dass eine Dichte der Mehrzahl von Lichtlenkabschnitten (100) mit einem Abstand von der Mehrzahl von Lichtquellen (50) zunimmt.

3. Anzeige nach Anspruch 1, wobei
die Mehrzahl von Lichtlenkabschnitten (100) derart ausgestaltet ist, dass zumindest entweder Anordnungsintervalle zwischen der Mehrzahl von Lichtlenkabschnitten (100) in der ersten Richtung unregelmäßig und in der zweiten Richtung senkrecht zu der ersten Richtung konstant sind, oder Bereiche der Mehrzahl von Lichtlenkabschnitten (100) über eine gesamte Region der Lichtleiterplatte (70), die nicht nur die vorgeschriebene Region (75) in der Nachbarschaft der Lichtaufnahmefläche, sondern auch eine Region (76, 77, 78), die eine andere als die vorgeschriebene Region (75) ist, umfasst, unregelmäßig sind.

4. Anzeige nach Anspruch 1, wobei
die Mehrzahl von Lichtlenkabschnitten (100) derart ausgestaltet ist, dass zumindest entweder Anordnungsintervalle zwischen der Mehrzahl von Lichtlenkabschnitten (100) oder Bereichen der Mehrzahl von Lichtlenkabschnitten (100) Regelmäßigkeit in einer Region der Lichtleiterplatte (70), die eine andere als die vorbeschriebene Region (75) ist, aufweisen.

5. Anzeige nach Anspruch 4, wobei
die Mehrzahl von Lichtlenkabschnitten (100) derart angeordnet ist, dass Anordnungsintervalle zwischen der Mehrzahl von Lichtlenkabschnitten (100) mit einem Abstand von der Mehrzahl von Lichtquellen (50) abnehmen.

6. Anzeige nach Anspruch 5, wobei
die Mehrzahl von Lichtlenkabschnitten (100) die gleiche Form aufweisen.

7. Anzeige nach Anspruch 1, wobei
die Mehrzahl von Lichtlenkabschnitten (100), für die Anordnungsintervalle in der ersten Richtung unregelmäßig und in der zweiten Richtung konstant sind, derart ausgestaltet sind, dass Bereiche der Mehrzahl von Lichtlenkabschnitten (100) unregelmäßig sind.

8. Anzeige nach Anspruch 1, wobei
die Mehrzahl von Lichtquellen durch Punktlichtquellen (50) gebildet ist.

9. Anzeige nach Anspruch 1, wobei
jeder der Mehrzahl von Lichtlenkabschnitten (100) eine Breite aufweist, die kleiner als eine Breite von jeder der Mehrzahl von Lichtquellen (100) in der ersten Richtung ist.

10. Anzeige nach Anspruch 4, wobei
jedes der Anordnungsintervalle zwischen der Mehrzahl von Lichtlenkabschnitten (100) kleiner ist als eine Breite der Mehrzahl von Lichtquellen (50) in der ersten Richtung.

## Revendications

1. Affichage (300, 400) comprenant :
une pluralité de sources de lumière (50) ;
une plaque guide de lumière (70) ayant une surface latérale (71) constituant une surface de réception de lumière sur laquelle la lumière émise depuis ladite pluralité de sources de lumière (50) est incidente,
une surface inférieure (72), et une surface (73) constituant une surface d'émission de lumière ;
une pluralité de portions de direction de lumière (100) prévues sur ladite surface inférieure (72) de ladite plaque guide de lumière (70), qui dirige ladite lumière incidente sur ladite plaque guide de lumière (70) vers ladite surface d'émission de lumière ; et
une cellule d'affichage (130) agencée sur ladite surface d'émission de lumière de ladite plaque guide de lumière (70), dans lequel ladite pluralité de sources de lumière (50) sont prévues pour être espacées les unes des autres d'une distance D le long d'une première direction dans laquelle s'étend ladite surface de réception de lumière (71),
**caractérisé en ce que**
ladite pluralité de portions de direction de lumière (100) prévues sur ladite surface inférieure (72) de ladite plaque de guidage de lumière (70) sont agencées, dans au moins une région prescrite (75) de ladite plaque de guidage de lumière (70), de telle manière qu'au moins :
soit les intervalles d'agencement entre ladite pluralité de portions de direction de lumière (100) sont irréguliers dans ladite première direction et constants dans une seconde direction orthogonale à ladite première direction,
soit les aires de ladite pluralité de portions de direction de lumière (100) sont irrégulières,
ladite région prescrite (75) comprend la région de la plaque de guidage de lumière (70) s'étendant depuis la surface de réception de lumière (71) jusqu'à une distance L depuis la surface de réception de lumière (71) où un rapport L/D est inférieur ou égal à 1.

2. Affichage selon la revendication 1, dans lequel
ladite pluralité de portions de direction de lumière (100) sont ainsi agencées que la densité de ladite pluralité de portions de direction de lumière (100) augmente avec la distance depuis ladite pluralité de sources de lumière (50).

3. Affichage selon la revendication 1, dans lequel
ladite pluralité de portions de direction de lumière (100) sont ainsi configurées qu'au moins
soit les intervalles d'arrangement entre ladite pluralité de portions de direction de lumière (100) sont irréguliers dans ladite première direction et constants dans ladite seconde direction orthogonale à ladite première direction
soit les aires de ladite pluralité de portions de direction de lumière (100) sont irrégulières sur une région entière de ladite plaque de guidage de lumière (70) incluant non seulement ladite région prescrite (75) au voisinage de ladite surface de réception de lumière mais aussi une région (76, 77, 78) autre que ladite région prescrite (75).

4. Affichage selon la revendication 1, dans lequel
ladite pluralité de portions de direction de lumière (100) sont ainsi configurées qu'au moins
soit les intervalles d'agencement entre ladite pluralité de portions de direction de lumière (100), soit des aires de ladite pluralité de portions de direction de lumière (100) présentent une régularité dans une région de ladite plaque de guidage de lumière (70) autre que ladite région prescrite (75).

5. Affichage selon la revendication 4, dans lequel
ladite pluralité de portions de direction de lumière (100) sont ainsi agencées que les intervalles d'agencement entre ladite pluralité de portions de direction de lumière (100) diminuent avec la distance depuis ladite pluralité de sources de lumière (50).

6. Affichage selon la revendication 5, dans lequel
ladite pluralité de portions de direction de lumière (100) ont la même forme les unes et les autres.

7. Affichage selon la revendication 1, dans lequel
ladite pluralité de portions de direction de lumière (100) pour lesquelles les intervalles d'agencement sont irréguliers dans ladite première direction et constants dans ladite seconde direction sont ainsi configurées que les aires de ladite pluralité de portions de direction de lumière (100) sont irrégulières.

8. Affichage selon la revendication 1, dans lequel
ladite pluralité de sources de lumière sont constituées par des sources de lumière ponctuelles (50).

9. Affichage selon la revendication, dans lequel
chacune de ladite pluralité de portions de direction de lumière (100) a une largeur plus petite qu'une largeur de chacune de ladite pluralité de sources de lumière (100) dans ladite première direction.

10. Affichage selon la revendication 4, dans lequel
chacun desdits intervalles d'agencement entre ladite pluralité de portions de direction de lumière (100) est plus petit qu'une largeur de ladite pluralité de sources de lumière (50) dans ladite première direction.
